Europäisches Patentamt

(19) European Patent Office

Office européen des brevets

(11) Publication number: **0 136 749**
**A1**

(12) # EUROPEAN PATENT APPLICATION

(21) Application number: 84201238.7

(22) Date of filing: 28.08.84

(51) Int. Cl.⁴: **H 04 Q 11/04**

(30) Priority: 02.09.83 NL 8303060

(43) Date of publication of application:
10.04.85 Bulletin 85/15

(84) Designated Contracting States:
DE FR GB NL SE

(71) Applicant: N.V. Philips' Gloeilampenfabrieken
Groenewoudseweg 1
NL-5621 BA Eindhoven(NL)

(72) Inventor: Van Baardewijk, Johannes
c/o INT. OCTROOIBUREAU B.V. Prof. Holstlaan 6
NL-5656 AA Eindhoven(NL)

(72) Inventor: Hartman, Johan Everhard Anton
c/o INT. OCTROOIBUREAU B.V. Prof. Holstlaan 6
NL-5656 AA Eindhoven(NL)

(72) Inventor: Bohlmeyer, Nicolaas
c/o INT. OCTROOIBUREAU B.V. Prof. Holstlaan 6
NL-5656 AA Eindhoven(NL)

(74) Representative: Hanneman, Henri Willem Andries
Maria et al,
INTERNATIONAAL OCTROOIBUREAU B.V. Prof.
Holstlaan 6
NL-5656 AA Eindhoven(NL)

(54) Telephone exchange comprising peripheral control domains.

㉘ For the communication between the peripheral control domains (PCD's) and the central control (CC) of a telephone exchange digital information is exchanged in time division multiplex *via* multiplex lines (ML₁) connected to the central switching network (DTN). According to the invention, one channel which is intended for the transmission of control information from and to the peripheral control domains comprises an asynchronous interface, whilst the remaining, (for example 128-1 channels) comprise a synchronous interface so as to maintain a communication channel between PCD and CC also in the event of a synchronism.

EP 0 136 749 A1

./...

FIG.1

"Telephone exchange comprising peripheral control domains".

The invention relates to a telephone exchange comprising a number of peripheral control domains (PCD1.....PCDn) which are coupled _via_ a switching network (DTN) to the central control (CC) and to each other, transmission channels being present between the peripheral control domains and the switching network for the synchronous transmission of information.

Such a telephone exchange is described in the European Patent Application 75.998.

Speech, data and control information is transmitted between the peripheral control domains and the switching network. In order to obtain a good transmission quality this information is transmitted synchronously, the peripheral control domains being synchronized with the clock signal coming from the switching network. A problem is that in the event of interference in a peripheral control domain which results in loss in synchronization, communication is no longer possible between the control domain and the switching network.

The invention has for its object to provide a telephone exchange with which transmission of information is possible also in the event of interference in the peripheral control domain. According to the invention, the telephone exchange of the type set forth in the opening paragraph is characterized in that the telephone exchange comprises at least one transmission channel arranged for asynchronous transmission of information arranged between the peripheral control domain and the switching network.

If, due to an interference transmission of information _via_ the synchronous channels is not possible then messages can be transmitted from and to the peripheral control domain _via_ the asynchronous channel. With the aid of these messages it is thus also possible to recover the synchronism again and the transmission of information can take place via the normal, synchronous channels.

Preferably, the telephone exchange according to the invention is of such a construction that each peripheral control domain comprises a domain-to-DTN interface transmission/receiving circuit which is coupled to the switching network via a multiplex line, the said transmission channel being formed by time slots located in corresponding positions in consecutive frames, that the domain-to-DTN interface receiving circuit comprises a first buffer for sequentially entering therein the bits received in each time slot, that the domain-to-DTN interface receiving circuit comprises at least one second buffer for entering therein once per frame the bits received in one predetermined time slot, that the first buffer is read once per time slot and that the second buffer is read once per frame, that the domain-to-DTN interface transmission circuit comprises a first transmit buffer for sequentially entering therein the bits to be transmitted in each time slot, that the domain-to-DTN interface transmission circuit comprises at least one second transmissing buffer for entering therein once per frame the bits to be transmitted in one predetermined time slot and that the domain-to-DTN interface transmission circuit comprises a selector connected to the transmission buffers for transmitting in predetermined time slots via the outgoing multiplex line, the bits stored in the transmission buffers.

The invention and its advantages will now be further described by way of example with reference to the accompanying Figures, in which:

Fig. 1 shows a block circuit diagram of a telephone exchange in which the measures according to the invention are applied: and

Fig. 2 shows an embodiment of an asynchronous interface circuit for use in the telephone exchange shown in Fig. 1.

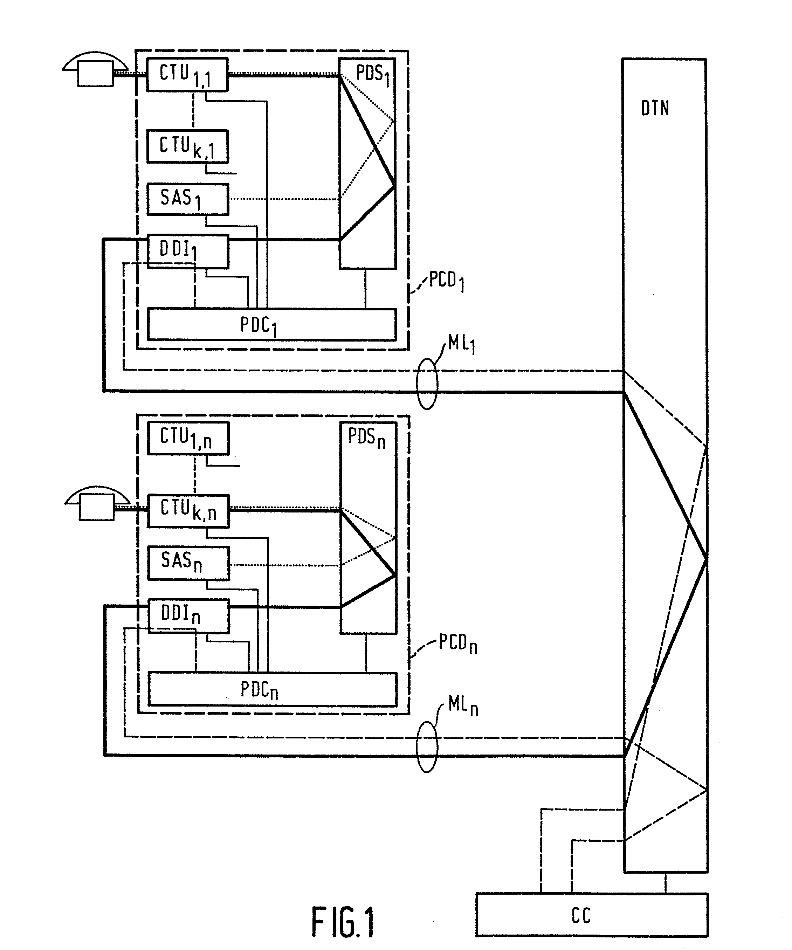

The telephone exchange shown in Fig. 1 comprises a number of peripheral control domains $PCD_1$, $PCD_2$, ....
$PCD_n$ which are coupled to each other and to a central con-
trol CC <u>via</u> a switching network DTN (only the peripheral
control domains $PCD_1$ and $PCD_n$ are shown in the Figure). Each
peripheral control domain $PCD_i$ (i = 1, 2, ...n) comprises
a number of interface circuits $CTU_{1,i}...CTU_{k,i}$ to which
subscriber equipment is connected. Subscriber equipment
must be understood to mean a telephone set, a data terminal,
a facsimile arrangement etc. In addition, each peripheral
control domain comprises a signaling unit $SAS_i$, a domain-
to-DTN interface circuit $DDI_i$ and a peripheral domain
switching stage $PDS_i$. The interface circuits $CTU_{j,i}$ (j =
1, 2, ...k), the signaling unit $SAS_i$, the switching stage
$PDS_i$ and the domain-to-DTN interface circuit $DDI_i$ are all
under the control of a peripheral domain-control $PDC_i$. The
interface circuits $CTU_{j,i}$, the signaling unit $SAS_i$ and the
peripheral switching stage of one specific peripheral
control domain are connected to the switching network
$PDS_i$ of that specific control domain. The signaling unit
$SAS_i$ can receive signaling information from the subscriber
equipment <u>via</u> the peripheral switching stage $PDS_i$ and the
relevant interface circuit $CTU_{j,i}$ and can transmit signal-
ing information to the subscriber equipment (Fig. 1 shows
such a connection by means of a dotted line). The domain-
to-DTN interface circuits $DDI_i$ (i = 1, 2, ...n) are further
connected <u>via</u> multiplex lines $ML_i$ to the trunk switching
network DTN for transmitting speech, data and message
traffic from and to other peripheral control domains or to
the central control CC, as the case may be. By means of a
thick, solid line, Figure 1 shows by way of example a
speech link between a subscriber connected to the first
peripheral control domain ($PCD_1$) and the last control
domain ($PCD_n$). At the same time, also by way of example,
message links are shown (by means of broken lines) between
the peripheral domain controls $PDS_1$ and $PDS_n$ respectively,
to the central control CC <u>via</u> trunk switching network DTN.

       In a preferred embodiment the multiplex lines $ML_i$
each comprises a number of (for example 32 or 128) time-division multiplex channels (for example with a capacity of 64 kbits/sec. each). A good signal transmission between DTN and PCD is only possible if the PCD is synchronized with the clock generator of the DTN, as the transfer of signals between PCD and DTN would not only cause bit loss (with digital transmission of the signal) but would also require additional equipment capable of compensating for bit rate variations (for example a "breathing" buffer store).

If, for example due to an interference the synchronization between a peripheral control domain  PCD and the trunk switching network DTN becomes lost, then adequate signal transmission between PCD and DTN can no longer take place as the synchronization information would then be missing or be faulty. To enable the peripheral control domain to again be brought to the synchronized state, at least one channel of each multiplex line $ML_i$ is, in accordance with the invention, of a type through which asynchronous information transmission can take place. The relevant channel, for example channel 0, must be provided for this purpose with an asynchronous interface circuit. Loss of information  will also occur in this channel during the asynchronous period. However, as only short messages are conveyed, (for triggering the PCD) and faulty messages are repeated if necessary, sufficient communication capacity is present to bring the PCD again to the synchronized state.

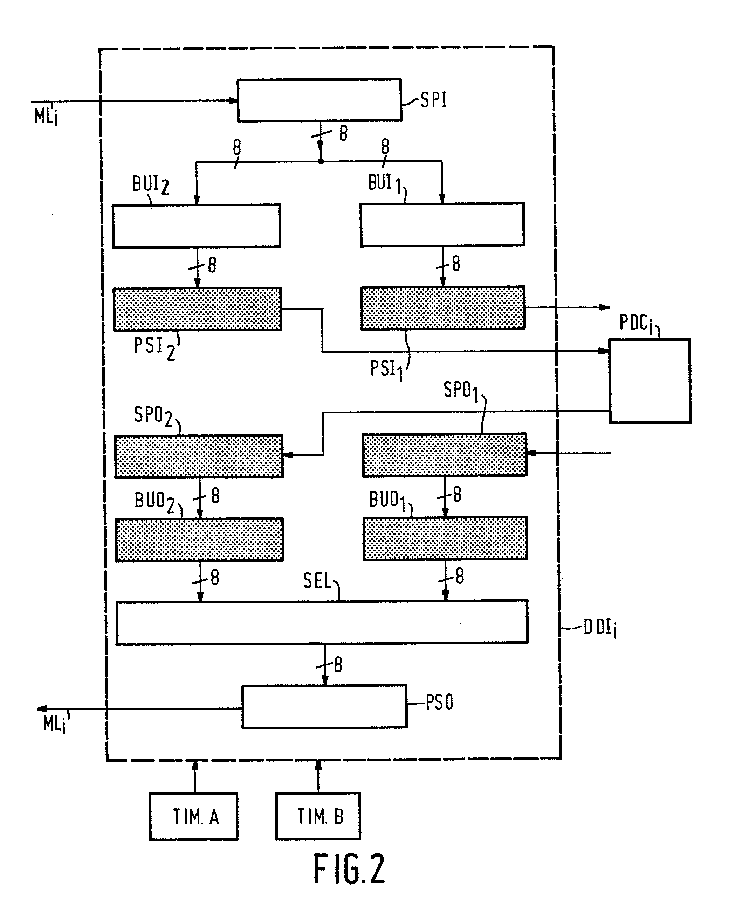

Fig. 2 shows an embodiment of the structure of an asynchronous interface circuit.

Such an interface circuit forms part of each of the domain-to-DTN interface transmission/receiving circuits $DTI_i$ (i = 1, 2, ...n), The incoming multiplex line $ML_i$ is connected to a series-parallel converter SPI of the DDI receiving circuit. The multiplex line comprises, for example, 128 time-division multiplex channels. Each channel is formed by a series of consecutive frames present in 125 $\mu$s time slots. Each time slot contains 8 bits. The series-parallel converter SPI converts the 8 bits which come in serially in each time slot into parallel form and stores them in a first (8 bit) buffer $EUI_1$. The bits in one time slot, for example time slot 0, are stored in a second (8bit) buffer $BUI_2$. The time slot 0 is identified in customary manner, namely by utilizing the synchronization characteristic present per frame. The conversion by series-parallel converter SPI and writing the two buffers BUI is effected under the control of the clock signals on the incoming multiplex line $ML_i$ (timing A). The two buffers BUI are read under the control of local clock signals (timing B) and further processed after parallel-series conversion. To that end an output of buffer BUI is connected to parallel-series converter $PSI_1$ and an output of buffer $BUI_2$ is connected to parallel-series converter $PSI_2$. An output of parallel-series converter $PSI_2$ is connected to the peripheral domain control $PDC_i$. In general, the frequencies of the two clock signals (timing A, B) will not be accurately equal to each other. As in buffer $BUI_2$ the 8 bits from time slot 0 are not available for one time slot (as in buffer BUI) but for 128 time slots, the probability that buffer $BUI_2$ is read (under the control of timing B) before the new 8 bits are present is very remote. At a frequency difference of 100 Hz between timing A and B (which both have nominally a frequency of 8192KHz) the 125 $\mu$sec frames of timing A and timing B will overlap once in every 10 seconds, a byte from the channel 0 consequently being skipped or being read twice. In 10 seconds 80,000 bytes will be transmitted <u>via</u> the channel 0, so that the error probability in an n-byte message is $\frac{n}{80,000}$. If channel 0 is used, as it is here, as a message channel from and to the peripheral domain control $PDC_i$, then this channel will remain available even when a relatively large difference between timing A and timing B occurs. At the same time this enables the synchronization to be recovered <u>via</u> the still present channel 0 on less of synchronization in the data channels (1-127).

Transferring data and control information from the peripheral control domain $PCD_i$ to the multiplex line $ML_i$ is effected in the corresponding, inverse way <u>via</u> the DDI

transmission circuit. The data are written into a first buffer $BUO_1$, _via_ a first outgoing series parallel converter $SPO_1$, whilst the time slots of channel 0 are read into a second buffer $BUO_2$ _via_ a second series-parallel converter $SPO_2$. The series-parallel converters $SPD_1$ and $SPD_2$ and the buffers $BUO_1$ and $BUO_2$ were controlled by the regime of timing A. The buffers $BUO_1$ and $BUO_2$ are read by a selector SEL under the control of timing B, and the 8 bit words obtained are multiplexed into one 8192kbit/s bit stream _via_ parallel-series converter PSO.

It is of course alternatively possible, if the need is felt for more than one asynchronous channel, to include for those channels separate buffers BUI, BUO and parallel-series (PSI) and series-parallel converters.

## CLAIMS

1. A telephone exchange comprising a number of peripheral control domains (PCD1.....PCDn) which via a switching network (DTN) are coupled to the central control (CC) and to each other, transmission channels being present between the peripheral control domains and the switching network for the synchronous transmission of information, characterized in that the telephone exchange comprises at least one transmission channel arranged for asynchronous transmission of information arranged between the peripheral control domain and the switching network.

2. A telephone exchange as claimed in Claim 1, characterized in that each peripheral control domain comprises a domain-to-DTN interface transmission/receiving circuit which is coupled to the switching network via a multiplex line, the said transmission channels being formed by time slots located in corresponding positions in consecutive frames, that the domain-to-DTN interface receiving circuit comprises a first buffer for sequentially entering therein the bits received in each time slot, that the domain-to-DTN interface receiving circuit comprises at least one second buffer for entering therein once per frame the bits received in a predetermined time slot, that the first buffer is read once per time slot and that the second buffer is read once per frame, that the domain-to-DTN interface transmission circuit comprises a first transmit buffer for sequentially entering therein the bits to be transmitted in each time slot, that the domain-to-DTN interface transmission circuit comprises at least one second transmission buffer for entering therein once per frame the bits to be transmitted in one predetermined time slot and that the domain-to-DTN interface transmission circuit comprises a selector connected to the transmission buffers for transmitting in predetermined time slots via

0136749

the outgoing multiplex line the bits stored in the transmission buffers.

0136749

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | INTERNATIONAL SWITCHING SYMPOSIUM, Montréal, 21st-25th September 1981, session 34A, paper 3, pages 1-9; F.J. SCHRAMEL et al.: "The peripheral control domain, an all-digital intelligent terminal for subscribers and trunks in the PRX/D system" <br> * Page 2, right-hand column, lines 28-38; page 3, left-hand column, paragraph 2.0, right-hand column, figure 3; pages 3,4, paragraph 2.4; page 8, left-hand column, lines 47-53; page 9, left-hand column, lines 55-58 * <br><br> --- | 1,2 | H 04 Q 11/04 |
| Y | EP-A-0 017 988 (CSELT) <br> * Page 2, lines 8-22; page 4, lines 17-29 * <br><br> --- | 1,2 | |
| A | FR-A-2 125 084 (PHILIPS) <br> * Page 1, line 23 - page 2, line 4; page 8, line 36 - page 9, line 29; claims * <br><br> --- | 1,2 | TECHNICAL FIELDS SEARCHED (Int. Cl.4) <br><br> H 04 Q <br> H 04 J |
| A | FR-A-2 165 182 (T.R.T.) <br> * Page 11, line 32 - page 12, line 5; claims 1,5 * <br><br> ---      -/- | 1 | |

The present search report has been drawn up for all claims

| Place of search <br> THE HAGUE | Date of completion of the search <br> 23-11-1984 | Examiner <br> DE MUYT H.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82

**0136749**

. Application number

European Patent
Office

**EUROPEAN SEARCH REPORT**

EP 84 20 1238

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | ELECTRICAL COMMUNICATION, vol. 54, no. 2, 1979, pages 94-105, London, GB; Y. BATTEUR et al.: "Hardware design for PCM-B trial exchange" * Page 99, left-hand column, line 23 - page 100, left-hand column, line 18 * | 1,2 | |
| A | FUJITSU SCIENTIFIC AND TECHNICAL JOURNAL, vol. 18, no. 3, September 1982, pages 351-379, Kawasaky, JP; E. ODERA et al.: "FETEX-150 digital switching system for central offices" * Pages 359-361, paragraphs 3.4 and 3.5 * | 2 | |
| A | IBM TECHNICAL DISCLOSURE BULLETIN, vol. 25, no. 11A, April 1983, pages 5793-5795, New York, USA; P. BORGNIS et al.: "PCM links to microprocessor signalling adapter" * Whole document * | 2 | TECHNICAL FIELDS SEARCHED (Int. Cl.4) |
| A | INTERNATIONAL ZURICH SEMINAR ON DIGITAL COMMUNICATIONS, Zürich, 7th-9th March 1978, IEEE cat. no. 78CH1325-O ASST, paper A5, pages 1-6; H.G. ALLES: "An intelligent network processor for a digital central office" * Page 2, left-hand column, lines 45-64; figure 1 * | 2 | |

The present search report has been drawn up for all claims

| Place of search THE HAGUE | Date of completion of the search 23-11-1984 | Examiner DE MUYT H.A. |
|---|---|---|